# NEUE EUROPÄISCHE PATENTSCHRIFT

(11) **EP 2 602 482 B2**
(45) Veröffentlichungstag und Bekanntmachung des Hinweises auf die Entscheidung über den Einspruch: **16.03.2022**
(45) Hinweis auf die Patenterteilung: 28.01.2015
(21) Anmeldenummer: 12005483.8
(22) Anmeldetag: 06.10.2005
(51) Int. Cl.: F03D 7/02, F03D 17/00, F16D 66/00, F16D 55/00, F16D 121/00, F16D 121/02, F16D 121/24

(54) **Windenergieanlage**
Wind Turbine
Eolienne

(30) Priorität: 19.10.2004 DE 102004051054
(43) Veröffentlichungstag der Anmeldung: 12.06.2013
(62) Teilanmeldung aus: 05021796.7
(73) Patentinhaber: Siemens Gamesa Renewable Energy Service GmbH, 20097 Hamburg (DE)
(72) Erfinder: Altemark, Jens, 24768 Rendsburg (DE); Bolln, Sönke, 25746 Heide (DE)
(74) Vertreter: Wallinger Ricker Schlotter Tostmann

(56) Entgegenhaltungen:
- EP-A- 0 419 207
- EP-A- 0 777 063
- WO-A-01/86141
- DE-A1- 4 231 107
- US-A1- 2003 111 306
- US-B1- 6 276 495

## Beschreibung

Die vorliegende Erfindung betrifft eine Vorrichtung für eine Windenergieanlage.

Windenergieanlagen sind ausgebildet, um Energie aus dem Wind aufzunehmen und in elektrische Energie umzuwandeln. Da der Wind mit wechselnder Stärke aus verschiedenen Richtungen weht, weisen Windenergieanlagen, um die Energieaufnahme aus dem Wind beeinflussen zu können, unter anderem beweglich angeordnete Komponenten auf.

Eine solche Komponente ist z. B. die Gondel, die drehbar auf dem Turm der Windenergieanlage angeordnet ist. Durch die drehbare Anordnung der Gondel kann der an der Gondel angeordnete Rotor immer ideal zum Wind ausgerichtet werden, so daß eine optimale Energieausbeute aus dem Wind erzielt werden kann.

Die drehbare Anordnung der Gondel auf dem Turm erfolgt über ein sogenanntes Azimutlager. Das Azimutlager ist meist als Wälzlager, z. B. als Vierpunkt-Kugellager, ausgeführt und weist einen Aussen- und einen Innenring auf, wobei der Innenring des Lagers z. B. mit der Gondel und der Aussenring mit dem Turm verbunden ist.

Die Ausrichtung des Rotors zum Wind über die drehbar angeordnete Gondel, die sogenannte Windnachführung, erfolgt mittels einer Vorrichtung.

Eine bekannte Vorrichtung weist mindestens einen Stellantrieb auf, der im Bereich des Azimutlagers angeordnet ist und über eine Steuerungseinrichtung betätigbar ist. Es ist bekannt, den Stellantrieb zum Beispiel hydraulisch auszubilden. Alternativ ist es aber auch bekannt, als Stellantrieb einen elektrischen Antriebsmotor einzusetzen.

Zum Zwecke der Windnachführung kann die bekannte Vorrichtung ein direkt oder indirekt über ein Getriebe mit dem Stellantrieb gekoppeltes Zahnritzel aufweisen, daß zum Beispiel in Eingriff mit einer am Aussenring des Azimutlagers vorgesehenen Aussenverzahnung ist. Der Stellantrieb ist mit der Gondel und damit mit dem Innenring des Lagers gekoppelt. Da der Aussenring fest mit dem Turm verbunden ist, ändert sich die Ausrichtung der Gondel, durch eine Betätigung des Stellantriebs.

Damit die bekannte Vorrichtung nicht über Gebühr belastet wird, weist sie weiterhin eine Bremseinrichtung auf, mit der eine eingestellte Ausrichtung der Gondel gehalten werden kann. Als Bremseinrichtung kann z. B. eine Haltebremse mit zwei Bremsbacken dienen, die mit der Gondel befestigt ist sowie eine zwischen dem Turm und dem Aussenring des Lagers stationär angeordnete Bremsscheibe.

Bei einer Betätigung der Bremse wird die zwischen den Bremsbacken angeordnete Bremsscheibe durch Reibschluß festgehalten, so daß die eingestellte Ausrichtung der Gondel fixiert ist. Die Betätigung der Haltebremse kann zum Beispiel über einen hydraulischen, pneumatischen elektrischen oder mechanischen Antrieb erfolgen.

Ein wesentlicher Gesichtspunkt bei der Auslegung von Windenergieanlagen ist die Betriebssicherheit der Anlage. Windenergieanlagen müssen, damit sie effizient arbeiten, möglichst wenig Ausfallzeiten aufweisen. Zudem müssen Gefahrenpotentiale wie zum Beispiel Brandgefahren minimiert werden, siehe "Windkraftanlangen im Netzbetrieb" von Siegfried Heuer (1996), 5.5.

Aufgabe der Erfindung ist es, ausgehend von dem erwähnten Stand der Technik, eine Vorrichtung für eine Windenergieanlage zu schaffen, durch die insbesondere die Betriebssicherheit der Windenergieanlage verbessert wird.

Gelöst wird die Aufgabe mit einer Vorrichtung für eine Windenergieanlage mit den Merkmalen des Anspruchs 1.

Die erfindungsgemäße Vorrichtung für eine Windenergieanlage weist zur Ausrichtung mindestens einer beweglich angeordneten Komponente der Windenergieanlage einen Stellantrieb auf, der über eine Steuerungseinrichtung betätigbar ist sowie eine Bremseinrichtung zum Halten einer eingestellten Ausrichtung der Komponente. Weiterhin weist die erfindungsgemäße Windenergieanlage mindestens einen mit der Steuereinrichtung gekoppelten, die Bremseinrichtung überwachenden Sensor auf, der so ausgebildet ist, daß er eine Fehlfunktion der Bremseinrichtung detektiert.

Eine nicht funktionierende Bremseinrichtung stellt ein großes Problem für die Betriebssicherheit einer Windenergicanlage dar. So führt zum Beispiel eine Bremse, deren Bremsbacken zu Bremszwecken nicht ordnungsgemäß schließen dazu, daß die Ausrichtung der Gondel über den Stellantrieb gehalten werden muss. Umgekehrt führt eine Bremseinrichtung deren Bremsbacken sich bei Bedarf beim Verstellvorgang nicht mehr öffnen zu einer gefährlichen Temperaturerhöhung in der Bremse, die im einfachsten Fall zu einem unnötigen Verschleiß der Bremsen führt und im schlimmsten Fall einen Brand in der Anlage verursachen kann.

Das erfindungsgemäße Vorsehen eines Sensor in der Bremseinrichtung bietet somit den Vorteil, das generell eine Fehlfunktion der Bremse erkennbar ist. Insbesondere kann der Sensor so ausgebildet sein, daß er Fehlfunktionen erkennt, die nicht sofort zu einem Abschalten der Anlage führen, sondern deren Fehlfunktion erst im Laufe der Zeit den Betrieb der Anlage stören oder sogar verhindern.

Gemäß einer vorteilhaften Ausgestaltung der Erfindung kann die auszurichtende Komponente der Windenergieanlage die auf dem Turm angeordnete Gondel sein.

Es ist gemäß einer vorteilhaften Ausgestaltung der Erfindung durchaus denkbar, daß, insbesondere im Hinblick auf zunehmenden Abmasse der Windenergieanlagen, auch die Verstellvorrichtung eines Rotorblattes eine Bremseinrichtung zum Halten einer Rotorblattausrichtung aufweist. Für diesen Fall ist das erfindungsgemäße Vorsehen eines Sensors zur Erkennung eines Defekts auch bei Verstellvorichtungen für Rotorblätter äußerst vorteilhaft.

Rotoren müssen z. B. zu Wartungszwecken eines Rotorblatts so verstellbar sein, daß das zu wartende Rotorblatt horizontal zur Turmachse ausgerichtet ist. Kleinere Rotoren können per Handbetrieb ausgerichtet werden. Die Ausrichtung per Handbetrieb ist bei sehr großen Rotoren aufgrund ihrer hohen Masse jedoch nicht mehr möglich, so daß auch hier eine Vorrichtung zum Ausrichten des Rotors vorgesehen werden muß. Entsprechend kann es sich gemäß einer weiteren vorteilhaften Ausgestaltung der Erfindung bei der Windenergleanlagenkomponente auch um den Rotor der Windenergieanlage handeln.

Gemäß einer weiteren vorteilhaften Ausgestaltung der Erfindung ist auch der Sensor mit der Steuerungseinrichtung gekoppelt und meldet der Steuerungseinrichtung eine Fehlfunktion der Bremseinrichtung. Unter der Kopplung des Sensors mit der Steuerungseinrichtung wird sowohl eine leitungsgebundene Verbindung, z. B. eine Kupferleitung oder eine Glasfaserleitung, als auch eine drahtlose Verbindung (z. B. WLAN etc.) verstanden.

Die Kopplung des Sensor mit der Steuerungseinrichtung bietet den Vorteil, das die Steuerungseinrichtung anhand vorgegebener Parameter prüfen kann, ob aufgrund einer gemeldete Fehlfunktion die Anlage weiterbetreibbar ist oder ob die Anlage notwendig abgeschaltet werden muss.

Gemäß einer Ausgestaltung der Erfindung kann der Sensor so ausgebildet und angeordnet sein, daß eine Temperaturänderung im Bereich der Bremseinrichtung erfassbar ist.

Diese Ausgestaltung der Erfindung bietet den Vorteil, das es über einen Temperatursensor möglich ist zu entscheiden, ob die Temperatur in der Bremse einen Bereich erreicht hat, der nicht mehr zulässig ist. Das Vorsehen eines Temperatursensors ist zum Beispiel vorteilhaft für den Fall, daß sich eine Bremsbacke nicht geöffnet hat und aufgrund dessen weiterhin an der Bremsscheibe anliegt. In einem solchen Fall würde sich die Bremsscheibe mittels des Stellantriebes trotzdem drehen, wodurch es aufgrund der Reibwirkung zwischen der Bremsbacke und der Bremsscheibe zu hohe Temperaturen Bereich kommt, die für den Betrieb der Bremse schädlich sind.

Gemäß einer weiteren vorteilhaften Ausgestaltung der Erfindung kann der Sensor zur Erfassung einer Temperaturänderung ein Thermistor, wie z. B. ein PTC, NTC oder ein PTxxx sein.

Der erfindungsgemäße Sensor kann gemäß einer weiteren vorteilhaften Ausgestaltung der Erfindung auch so ausgebildet und angeordnet sein, daß Abnutzungserscheinungen der Bremseinrichtung erfassbar sind.

Ein solcher Sensor kann z. B. in den Bremsbacken, vorteilhaft direkt im Bremsbelag integriert werden. Mittels eines solchen Sensors kann festgestellt werden, wann ein Bremsbelag so abgenutzt ist, das er ausgewechselt werden muß. Zudem kann der Sensor so ausgebildet sein, daß mittels der Steuereinrichtung erkannt wird, wie stark die Abnutzung der Bremsbeläge über einen bestimmten Zeitraum ist, so daß z. B. der Zeitraum abschätzbar ist, wann der Bremsbelag nicht mehr zu verwenden ist.

Um möglichst viel Energie aus dem Wind aufnehmen zu können, werden die Rotoren der Windenergieanlagen immer größer ausgebildet. Entsprechend nehmen auch die übrigen Anlagenabmessungen immer weiter zu. Die zunehmenden Abmessungen der Gondel und damit entsprechend verbunden die zunehmende Masse der Gondel führt dazu, daß ein Stellantrieb zur Ausrichtung der Gondel nicht ausreicht. Gemäß einer vorteilhaften Ausgestaltung der Erfindung weist die Vorrichtung daher mehrere Stellantriebe auf, wobei gemäß einer weiteren vorteilhaften Ausgestaltung der Erfindung die Stellantriebe mechanisch gekoppelt sein können.

Wie oben bereits erwähnt, kann es vorkommen, daß die Bremseinrichtung feststeht, das heißt, daß sich beide Bremsbacken nicht öffnen und die Bremsscheibe weiterhin zwischen sich einklemmen. Bei einem Antriebsverbund von zwei Stellantrieben wird eine Windnachführung, die nur eine Bremse aufweist, an der Bewegung gehindert. In einem solchen Fall würde der Antriebsverbund durch die feststehenden Bremse ins Kuraschlußverhalten gebracht werden und die Motorschutzschalter der Motoren würden auslösen und den Betrieb der Stellantriebe unterbinden.

Bei einem Antriebsverbund von mehr als zwei Stellantrieben würde das Bremsmoment einer Bremse eines Antriebes nicht ausreichen um den Antriebsverbund in das Kurzschlußverhalten zu bringen und die Motorschutzschalter auszulösen. Die Folge ist, daß die Windnachführung gegen die gebremste Anlage gefahren wird. Aufgrund dessen wird die Bremse undefinierte Temperaturen annehmen, die schlimmstenfalls zu einem Brand in der Anlage führen können,

Insbesondere wenn eine Vorrichtung mehrere Stellantriebe aufweist ist der Einsatz der vorliegenden Erfindung sowie ihrer Ausgestaltungen besonders vorteilhaft. So können zum Beispiel pro Bremsbacke ein Thermistor vorgesehen werden. Öffnet die Bremse tatsächlich einmal nicht, so registriert die Steuerungseinrichtung die ansteigenden Temperaturen. In der Steuerungseinrichtung kann hinterlegt sein, daß bei einem Überschreiten einer vorgegebenen Temperatur die Anlage abgeschaltet wird. Denkbar wäre aber auch, daß die Sensoren so ausgebildet und mit dem Stellantrieb gekoppelt sind, daß der Stellantrieb bei Überschreiten einer Grenztemperatur automatisch abgeschaltet wird.

Es ist vorteilhaft pro Bremseinrichtung einen oder sogar mehrere Sensoren vorzusehen. Dies ist aber nicht zwingend, sondern es ist durchaus denkbar nur in ausgewählten Bremseinrichtungen Sensoren vorzusehen.

Wie oben bereits erwähnt kann der Stellantrieb z. B. ein hydraulischer Motor sein. Gemäß einer vorteilhaften Ausgestaltung der Erfindung ist jedoch mindestens ein Stellantrieb, vorzugsweise aber alle Stellantriebe, als elektrischer Motor ausgebildet.

Gemäß der Erfindung ist die Bremseinrichtung mit dem elektrischen Motor gekoppelt, wobei gemäß einer weiteren vorteilhaften Ausgestaltung der Erfindung die, mit dem elektrischen Motor gekoppelte Bremseinrichtung als Einscheibenbremse ausgebildet ist, die einen feststehenden Bremsteil und einen drehbaren Bremsteil aufweist, wobei gemäß einer weiteren vorteilhaften Ausgestaltung der Erfindung der Sensor in dem feststehenden Bremsteil der Einscheibenbremse angeordnet ist.

Gemäß einer weiteren vorteilhaften Ausgestaltung der Erfindung kann die Bremseinrichtung auch als hydraulische Bremseinrichtung ausgebildet sein. Denkbar ist auch, für einige oder alle Stellantriebe mindestens eine Bremseinrichtung vorzusehen oder in mehreren oder allen Bremseinrichtungen mindestens einen Sensor vorzusehen.

Gemäß einer weiteren vorteilhaften Ausgestaltung der Erfindung können, wenn mehrere Sensoren in der Vorrichtung vorgesehen sind, diese in Reihe geschaltet werden und als Sensoreneingang mit der Steuerungseinrichtung verbunden sein. Denkbar ist aber auch, jeden Sensor mit der Steuerungseinrichtung zu verbinden. Dies würde den Vorteil bieten, daß die Steuerungseinrichtung auf diese Weise über die Fehlermeldung des Sensors erkennen würde, welche Bremseinrichtung einen Defekt aufweist.

Im folgenden soll die Erfindung anhand eines Ausführungsbeispieles näher erläutert werden. Es zeigt:
- Fig 1: eine Windenergieanlage in Seitenansicht
- Fig 2: einen Schnitt entlang der Linie X-X dargestellt in Fig 1
- Fig 3: einen Schnitt entlang der Linie Y-Y in Fig 2
- Fig 4: eine Schnittansicht durch die Verbindung eines Rotorblatts mit der Nabe eines Rotors

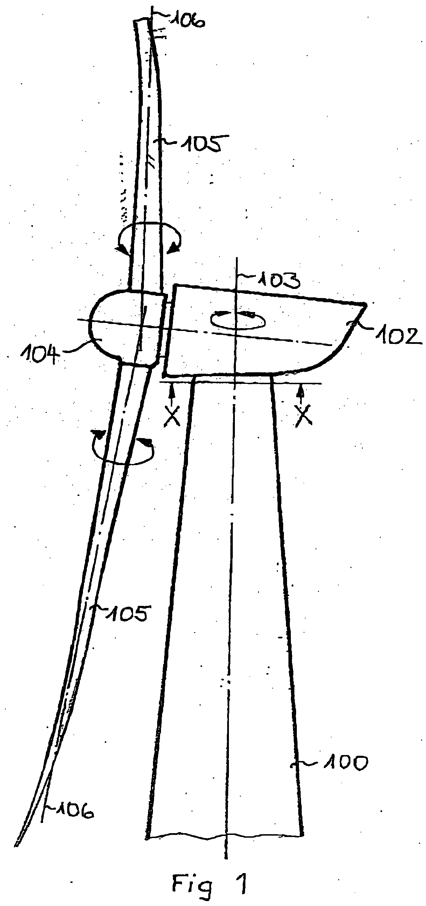

Die Fig 1 zeigt eine Windenergieanlage mit einem Turmabschnitt 100, auf dem eine Gondel 102 angeordnet ist. Die Gondel 102 ist um die Längsachse 103 des Turmes drehbar. An der Gondel 102 ist ein Rotor 104 drebbar gelagert. An dem Rotor 104 sind Rotorblätter 105 angeordnet, die jeweils um ihre Längsachsen 106 drehbar ausgebildet sind.

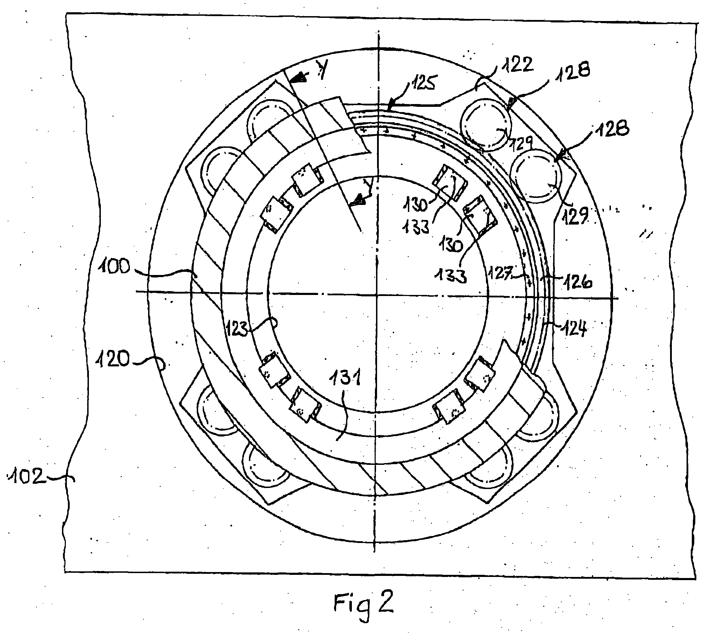

In der Fig 2 ist ein Schnitt durch den Turm 100 entlang der, in der Fig 1 dargestelhen Linie Y-Y dargestellt.

Die Fig 2 zeigt die Gondel 102 von unten, wobei der vordere und der hintere Bereich der Gondel aus Darstellungsgründen weg gebrochen ist. Die Gondel 102 weist für die Verbindung mit dem Turm 100 eine Gondelöffnung 120 auf Aus Darstellungsgründen ist der geschnittene Turm 100 ebenfalls partiell weg gebrochen, um die Verbindung zwischen dem Turm und der Gondel besser darstellen zu können.

Die Verbindung der Gondel 102 mit dem Turm 100 erfolgt über ein Azimutlager 125. Das Azimutlager besteht aus einem Aussenring 126 und einem Innenring 127. Der Aussenring 126 ist mit dem Turm 100 gekoppelt und weist zudem eine Aussenverzahnung 124 auf, die in der Fig 2 mittels einer Strich-Punktlinie dargestellt ist. Der Innenring 127 ist mit einem in der Gondel 102 angeordneten Maschinenträger 122 verbunden. Um einen Zugang von dem Turm auf den Maschinenträger 122 zu ermöglichen, ist in dem Maschinenträger eine Zugangsöffnung 123 vorgesehen.

Die Fig 2 zeigt ein Ausführungsbeispiel für die Ausbildung einer Verstellvorrichtung für die Gondel 102. Zu diesem Zweck sind acht Stellantriebe 128 vorgeschen, wobei jeweils zwei Stellantriebe 128 als Paar angeordnet und zu den anderen Stelluntriebspaaren um jeweils 90° versetzt sind. Die Stellantriebe 128 werden über den Maschinenträger 122 gehalten. Weiterhin weist jeder Stellantrieb 128 ein Zahnritzel 129 auf, das in Eingriff mit der Aussenverzahnung des Aussenrings 126 des Azimutlager 125 ist.

Die Ausrichtung der Gondel 102 erfolgt über eine Betätigung der Stellantriebe 128 mittels einer nicht dargestellte Steuerungseinrichtung. Zum Halten einer über die Steuerungseinrichtung dargestellten Ausrichtung sind in dem dargestellten Ausführungsbeispiel acht Bremseinrichtungen 130 dargestellt. Jeweils eine Bremseinrichtung ist im Bereich eines Stellantriebes 128 angeordnet, wobei die Bremseinrichtungen 130 jeweils fest mit dem Maschinenträger 122 verbunden sind. Jede Bremseinrichtung 130 weist zwei Bremsbacken auf, die in dieser Darstellung nicht sichtbar sind und die bei einer Betätigung der Bremseinrichtung eine Reibschlußverbindung mit einer Bremsscheibe 131 eingehen, die zwischen die beiden Bremsbacken ragt. Die Bremsscheibe 131 ist fest zwischen dem Turm 100 und dem Aussenring 126 des Azimutlagers 125angeordnet.

Jede Bremseinrichtung 130 weist einen integrierten Sensor 133 auf, der in dieser Ansicht durch eine Punktlinie dargestellt ist und der mit der nicht dargestellten Steuerungseinrichtung gekoppelt ist, wobei der Sensor 133 als Temperatursensor ausgebildet sein kann. Tritt nun der Fall ein, daß eine oder mehrere der Bremseinrichtungen 131 sich, aus welchem Grund auch immer, nicht öffnen, so erfolgt aufgrund des hohen Drehmomentes durch die acht Stellantriebe trotzdem eine Ausrichtung der Gondel 102. Bei nicht geöffneten Bremsbacken entstehen aufgrund der Reibung zwischen den Bremsbacken und der Bremsscheibe 131 hohe Temperaturen. Der Anstieg der Temperatur in der Bremseinrichtung wird über den Sensor 133 erfasst und der Steuerungseinrichtung mitgeteilt.

Die Steuerungseinrichtung kann so ausgebildet sein, daß sie z. B. beim Überschreiten einer Höchsttemperatur die Anlage anhält, um einen Brand in der Anlage sicher ausschließen zu können.

Wie oben bereits erläutert, ist es denkbar, das jeder Sensor mit der Steuerungseinrichtung koppelbar ist. Dies würde die Feblerfindung bei einem Defekt einer Bremseinrichtung erleichtern. Andererseits ist es aber auch denkbar, daß die Sensoren in Reihe geschaltet werden und dann als ein Sensoreingang mit der Steuerungseinrichtung gekoppelt sind. Diese Ausführung würde die erforderlichen Vezbindungen zwischen den Bremseinrichtungen und der Steuerungseinrichtung erheblich reduzieren.

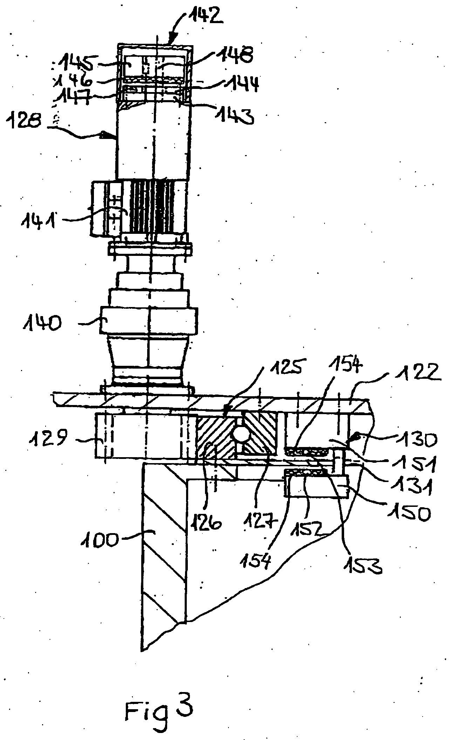

Die Fig 3 zeigt einen Schnitt entlang der Linie Y-Y, dargestellt in Fig 2. In dieser Schnittdarstellung ist ein Ausschnitt des Turmes 100 zu sehen. Aus Darstellungsgründen wurde die Gondel 102 nicht eingezeichnet. Auf dem Turm 100 ist das Azimutlager 125 angeordnet. Wie oben bereits erläutert, ist der Aussenring 126 fest mit dem Turm 100 verbunden. Der Innenring 127 ist mit dem oberhalb des Azimutlagers 125 angeordneten Maschinenträger 122 fest verbunden, wobei der Maschinenträger in dieser Ansicht nur teilweise dargestellt ist.

In der Fig 3 ist weiterhin ein Stellantrieb 128 dargestellt. Der Stellantrieb 128 weist ein Zahnritzel 129 auf, daß in Eingriff mit der Aussenverzahnung des Aussenrings 126 ist. Das Zahnritzel 129 ist über ein Getriebe 140 mit einem elektrischen Motor 141 gekoppelt.

Zusätzlich zu der in Fig 2 dargestellten Bremseinrichtung ist in der Fig 3 eine weitere Bremseinrichtung dargestellt.

Hierbei handelt es sich um eine Einscheibenbremse 142, die oberhalb des Motors 141 angeordnet ist. Das Gehäuse der Einscheibenbremseinrichtung 142 ist aus Darstellungsgründen weg gebrochen worden. Die Einscheibenbremseinrichtung 142 besteht aus einem feststehenden Bremsteil 143, der ein Reibblech 144 aufweist. Der feststehende Bremsteil ist drehfest mit dem Gehäuse des elektrischen Motors 141 gekoppelt ist. Weiterhin weist die Einscheibenbremseinrichtung 142 ein drehbares Bremsteil 145 mit einer Bremsscheibe 146 auf, das z. B. über eine Passfederverbindung mit der Welle 148 des elektrischen Motors 141 gekoppelt ist. Das drehbare Bremsteil 145 ist zudem, um eine Reibschlußverbindung mit dem Reibblech 144 herstellen zu können, in axialer Richtung mittels eines nicht dargestellten Antriebes bewegbar, z. B. über Druckluft, Elektromagnet, Hydraulik etc.. Der Antrieb ist vorteilhaft so ausgeführt, daß die Bremse im Ruhezustand gegen die Bremsscheibe bremsen und für einen Verstellvorgang aktiv gelüftet werden muß. Diese sogenannte Fail-Safe-Anordnung wird häufig durch eine Feder realisiert, die die Bremsbacken im Ruhezustand gegen die Bremsscheibe drücken.

Um auch bei dieser Bremseinrichtung eine defekte Bremse detektieren zu können, ist in dem dargestellten Ausführungsbeispiel in dem Reibblech 144 ein Sensor 147 , z. B. ein Thermistor angeordnet, der wiederum direkt oder indirekt mit der Steuerungseinrichtung gekoppelt sein kann.

In der Fig 3 ist weiterhin auch die, in der Fig 2 sichtbare Bremseinrichtung 130 dargestellt, die mit dem Maschinenträger 122 verbunden ist. Wie bereits erläutert, weist die Bremseinrichtung 130 zwei Bremsbacken 150, 151 mit zwei Bremsbelägen 154 auf. Zwischen den Bremsbacken 150, 151 ist die Bremsscheibe 131 angeordnet, die fest mit dem Turm 100 und dem Aussenring 126 gekoppelt ist.

Zum Zwecke einer Reibschlußverbindung zwischen den Bremsbacken 150, 151 und der Bremsscheibe 131 werden die Bremsbacken 150, 151 mittels eines, nicht dargestellten hydraulischen Antriebes in Richtung der Bremsscheibe 131 bewegt. Zur Erkennung, ob die Bremsbacken 150, 151 sich nicht geöffnet haben, ist in beiden Bremsbacken jeweils ein Temperatursensor 152, 153 angeordnet. Das Vorsehen von jeweils einem Sensor in einer Bremsbacke ermöglicht, das erkannt wird, wenn sich nur einer Bremsbacke geöffnet hat, die andere aber noch in einer Reibschlußverbindung mit der Bremsscheibe ist. Da die Reibgeschwindigkeit der Bremseinrichtung 130 erheblich geringer ist als die der motorseitigen Bremseinrichtung 147, sind entsprechend sensible Temperatursensoren einzusetzen. Alternativ kann der Einsatz von Piezo-Elementen zur Erfassung der Bremskraft vorgesehen werden.

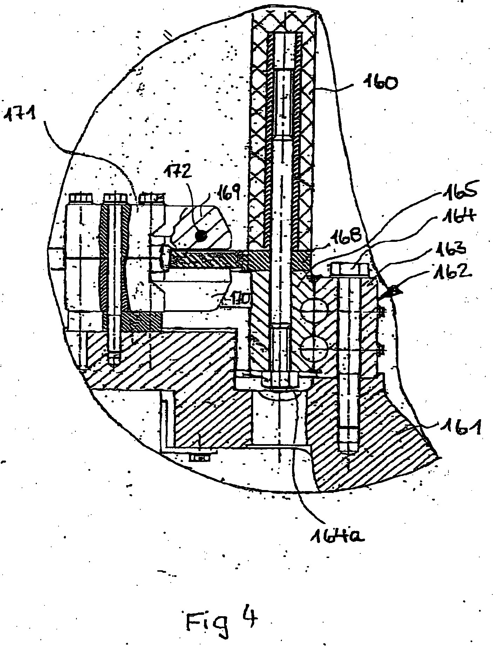

Die Fig 4 zeigt in einer Schnittansicht die Verbindung eines Rotorblatts 160 mit der Nabe 161 eines Rotors.

Die Fig 4 zeigt ein Rotorblatt 160, das über ein Blattlager 162 mit einer Rotomabe 161 verbunden ist, wobei es sich bei dem dargestellten Blattlager 162 um ein doppelreihiges Vierpunktlager handelt. Das Blattlager 162 weist einen Außenring 163 auf, der mittels Schraubenverbindungen 164 fest mit der Rotornabe 161 verbunden ist. In dem Außenring 163 ist ein Innenring 165 drehbar angeordnet, wobei der Innenring 165 über Schraubenverbindungen 164a fest mit dem Rotorblatt 160 verbunden ist. Zwischen dem Innenring 165 und dem Rotorblatt 160 ist eine Bremsscheibe 168 eingelegt, die über eine obere Bremsbacke 169 und eine untere Bremsbacke 170 einer Bremszange 171 mit einer erforderlichen Haltekraft beaufschlagbar sind. Der die Bremseinrichtung überwachende Sensor 172 ist in dem dargestellten Ausführungsbeispiel in der oberen Bremsbacke 170 angeordnet.

Dargestellt ist eine Ausführung für z.B. eine hydraulische Verstelleinrichtung. Eine Kombination der Bremsvorrichtung 171 mit einem elektrischen Antrieb wie er in der Fig 3 für die Windnächführung verwendet wird, ist leicht realisierbar, indem die Bremszange 171 mit der Halterung nach links verschoben wird, so daß Platz für eine Innenverzahnung des Innenrings 165 entsteht.

## Patentansprüche

1. Windenergieanlage mit einem Turm, eine auf dem Turm um die Längsachse des Turmes drehbar an- geordnete Gondel, einen an der Gondel drehbar gelagerten Rotor und an dem Rotor angeordnete jeweils um ihre Längsachsen drehbar angeordnete Rotorblätter, wobei die Verbindung der Gondel mit dem Turm über ein Azimutlager erfolgt und wobei die Rotorblätter über Blattlager mit einer Rotornabe verbunden sind sowie einer Vorrichtung zur Ausrichtung mindestens einer beweglich angeordneten Komponente (104, 102) der Windenergieanlage zur Beeinflußung der Energieaufnahme aus dem Wind, mit mindestens einem Stellantrieb (128) zur Einstellung einer Ausrichtung der Komponente, der über eine Steuerungseinrichtung betätigbar ist, mindestens einer Bremseinrichtung (142) zum Halten einer eingestellten Ausrichtung der Komponente (104, 102), und mindestens ein, die Bremseinrichtung überwachender Sensor (147), der so ausgebildet ist, daß er eine Fehlfunktion der Bremseinrichtung detektiert, wobei die Vorrichtung mehrere Stellantriebe (128) aufweist, die mechanisch gekoppelt sind, wobei mindestens einer der Stellantriebe (128) mindestens einen elektrischen Motor (141) aufweist, wobei die Bremseinrichtung (142) mit dem elektrischen Motor (141) gekoppelt ist, wobei der Sensor (147) mit der Steuerungseinrichtung gekoppelt ist und eine Fehlfunktion der Bremseinrichtung an die Steuerungseinrichtung meldet, und der Sensor (147) so ausgebildet und angeordnet ist, daß eine Temperaturänderung im Bereich der Bremseinrichtung erfassbar ist.

2. Vorrichtung nach Anspruch 1, **dadurch gekennzeichnet, daß** die Komponente der Windenergieanlage die auf dem Turm drehbar angeordnete Gondel (102) ist.

3. Vorrichtung nach Anspruch 1, **dadurch gekennzeichnet, daß** die Komponente ein Rotorblatt (105) ist.

4. Vorrichtung nach Anspruch 1, **dadurch gekennzeichnet, daß** der Sensor (147) als Thermistor ausgebildet ist.

5. Vorrichtung nach Anspruch 1, **dadurch gekennzeichnet, daß** der Sensor (133, 147, 152, 153, 172) so ausgebildet und angeordnet ist, daß Abnutzungserscheinungen der Bremseinrichtung erfassbar sind.

6. Vorrichtung nach Anspruch 1, **dadurch gekennzeichnet, daß** die mit dem elektrischen Motor (141) gekoppelte Bremseinrichtung (142) als Einscheibenbremse ausgebildet ist, die einen feststehenden Bremsteil (143) und einen drehbaren Bremsteil (145) aufweist.

7. Vorrichtung nach dem vorhergehenden Anspruch 6, **dadurch gekennzeichnet, daß** der Sensor (147) in dem feststehenden Bremsteil (143) der Einscheibenbremse (142) angeordnet ist.

8. Vorrichtung nach einem der vorhergehenden Ansprüche, **dadurch gekennzeichnet, daß** die Bremseinrichtung als hydraulische Bremseinrichtung ausgebildet ist.

9. Vorrichtung nach einem der vorhergehenden Ansprüche, **dadurch gekennzeichnet, daß** für einige oder alle Stellantriebe eine Bremseinrichtung vorgesehen sind.

10. Vorrichtung nach dem vorhergehenden Anspruch 9, **dadurch gekennzeichnet, daß** in mehreren oder allen Bremseinrichtungen ein Sensor vorgesehen ist.

11. Vorrichtung nach dem vorhergehenden Anspruch 10, **dadurch gekennzeichnet, daß** die Sensoren in Reihe geschaltet werden und als Sensoreneingang mit der Steuerungseinrichtung verbunden sind.

## Claims

1. A wind turbine comprising a tower, a nacelle that is arranged on the tower such that it can turn about the longitudinal axis of the tower, a rotor that is pivot-mounted to the nacelle, and rotor blades that are arranged on the rotor such that they can each turn about their longitudinal axes, wherein the connection of the nacelle to the tower is established via a yaw bearing and wherein the rotor blades are connected to a rotor hub via blade bearings, and comprising a device for orienting at least one component (104, 102) of the wind turbine, said component (104, 102) being arranged in a moving manner and intended to have an effect on the collection of energy from the wind, comprising at least one actuating drive (128) for adjusting an orientation of the component, said actuating drive (128) being operable via a control device, at least one brake assembly (142) for holding an adjusted orientation of the component (104, 102), and at least one sensor (147) that monitors the brake assembly and is configured such that it detects a malfunction of the brake assembly, wherein the device comprises a plurality of actuating drives (128) that are coupled mechanically, wherein at least one of the actuating drives (128) comprises at least one electric motor (141), wherein the brake assembly (142) is coupled to the electric motor (141), wherein the sensor (147) is coupled to the control device and reports a malfunction of the brake assembly to the control device and the sensor (147) is configured and arranged such that a change in temperature in the vicinity of the brake assembly can be detected.

2. The device according to claim 1, **characterised in that** the component of the wind turbine is the nacelle (102) which is pivot-mounted to the tower.

3. The device according to claim 1, **characterised in that** the component is a rotor blade (105).

4. The device according to claim 1, **characterised in that** the sensor (147) is configured as a thermistor.

5. The device according to claim 1, **characterised in that** the sensor (133, 147, 152, 153, 172) is configured and arranged such that signs of wear of the brake assembly can be detected.

6. The device according to claim 1, **characterised in that** the brake assembly (142) that is coupled to the electric motor (141) is configured as a single disc brake which comprises a stationary brake part (143) and a rotating brake part (145).

7. The device according to the preceding claim 6, **characterised in that** the sensor (147) is arranged in the stationary brake part (143) of the single disc brake (142).

8. The device according to any one of the preceding claims, **characterised in that** the brake assembly is configured as a hydraulic brake assembly.

9. The device according to any one of the preceding claims, **characterised in that** a brake assembly is provided for some or all of the actuating drives.

10. The device according to the preceding claim 9, **characterised in that** a sensor is provided in a plurality or all of the brake assemblies.

11. The device according to the preceding claim 10, **characterised in that** the sensors are connected in series and are connected to the control device as sensor input.

## Revendications

1. Éolienne avec une tour, une nacelle placée sur la tour de façon à pouvoir pivoter autour de l'axe longitudinal de la tour, un rotor logé sur la nacelle de façon à pouvoir tourner et des pales de rotor respectivement logées sur le rotor de façon à pouvoir pivoter autour de leur axe longitudinal, l'assemblage entre la nacelle et la tour étant réalisé au moyen d'un palier azimutal et les pales de rotor étant fixées au moyeu du rotor par des paliers, et avec un dispositif d'orientation d'au moins un composant mobile (104, 102) de l'éolienne pour influencer l'absorption d'énergie éolienne, avec au moins un servomoteur (128) pouvant être actionné par un dispositif de commande pour ajuster l'orientation du composant, au moins un dispositif de freinage (142) pour maintenir l'orientation du composant (104, 102) lorsque celle-ci a été ajustée, et au moins un capteur (147) surveillant le dispositif de freinage et conçu de façon à détecter un dysfonctionnement du dispositif de freinage, le dispositif présentant plusieurs servomoteurs (128) accouplés mécaniquement, l'un au moins de ces servomoteurs (128) présentant au moins un moteur électrique (141), le dispositif de freinage (142) étant accouplé au moteur électrique (141) et le capteur (147) étant couplé au dispositif de commande et signalant un dysfonctionnement du dispositif de freinage au dispositif de commande, le capteur (147) étant disposé et conçu de façon à permettre la saisie d'une modification de température au niveau du dispositif de freinage.

2. Dispositif selon la revendication 1, **caractérisé en ce que** le composant de l'éolienne est la nacelle (102) placée sur la tour de façon à pouvoir pivoter.

3. Dispositif selon la revendication 1, **caractérisé en ce que** le composant est une pale de rotor (105).

4. Dispositif selon la revendication 1, **caractérisé en ce que** le capteur (147) est réalisé sous forme de thermistance.

5. Dispositif selon la revendication 1, **caractérisé en ce que** le capteur (133, 147, 152, 153, 172) est conçu et agencé de façon à permettre la saisie de phénomène d'usure du dispositif de freinage.

6. Dispositif selon la revendication 1, **caractérisé en ce que** le dispositif de freinage (142) couplé au moteur électrique (141) est conçu sous forme de frein monodisque présentant un élément de freinage fixe (143) et un élément de freinage tournant (145).

7. Dispositif selon la revendication précédente 6, **caractérisé en ce que** le capteur (147) est placé dans l'élément de freinage fixe (143) du frein monodisque (142).

8. Dispositif selon l'une des revendications précédentes, **caractérisé en ce que** le dispositif de freinage est conçu sous forme de dispositif de freinage hydraulique.

9. Dispositif selon l'une des revendications précédentes, **caractérisé en ce qu'**un dispositif de freinage est prévu pour certains servomoteurs ou pour tous les servomoteurs.

10. Dispositif selon la revendication précédente 9, **caractérisé en ce qu'**un capteur est prévu dans plusieurs dispositifs de freinage ou dans tous les dispositifs de freinage.

11. Dispositif selon la revendication précédente 10, **caractérisé en ce que** les capteurs sont couplés en série et connectés comme entrée de capteurs avec le dispositif de commande.
